(19) Europäisches Patentamt
European Patent Office
Office européen des brevets

(11) **EP 4 736 660 A1**

(12) **EUROPEAN PATENT APPLICATION**
published in accordance with Art. 153(4) EPC

(43) Date of publication:
**06.05.2026 Bulletin 2026/19**

(21) Application number: **24831707.5**

(22) Date of filing: **14.06.2024**

(51) International Patent Classification (IPC):
**A23D 9/00** *(2006.01)* **A23D 9/04** *(2006.01)*
**A23G 1/38** *(2006.01)*

(52) Cooperative Patent Classification (CPC):
**A23D 9/00; A23D 9/04; A23G 1/38**

(86) International application number:
**PCT/JP2024/021601**

(87) International publication number:
**WO 2025/004842 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.06.2023 JP 2023105437**

(71) Applicant: **Fuji Oil Company, Limited
Izumisano-shi
Osaka 598-8540 (JP)**

(72) Inventor: **YAMAMOTO, Kazuhiro
Izumisano-shi, Osaka 598-8540 (JP)**

(74) Representative: **Becker, Eberhard
Becker Kurig & Partner
Patentanwälte mbB
Bavariastraße 7
80336 München (DE)**

(54) **OIL OR FAT FOR CHOCOLATES**

(57) The present invention addresses the problem of providing: an oil or fat for chocolates, which has bloom resistance at a level similar to conventional CBE, and in which the change in viscosity in a tempering process is small; and a chocolate using the oil or fat. The present invention preferably addresses the problem of further providing: an oil or fat for chocolates, which has good tempering properties under wide range of tempering conditions; and a chocolate using the oil or fat. The problems can be solved by an oil or fat for chocolates, which satisfies all of requirements (A)-(D). (A): The St2O triglyceride content is 10-50 wt%. (B): The ratio of the StStO triglyceride content to the St2O triglyceride content is at most 10 wt%. (C): The P2O triglyceride content is at least 3 wt%. (D): The ratio of the PPO triglyceride content to the P2O triglyceride content is at least 23 wt%.

EP 4 736 660 A1

## Description

Technical Field

Related Art

The present application claims the rights of priority from Japanese Patent Application No. 2023-105437, which was filed with the Japan Patent Office on June 27, 2023. This application that serves as the basis for claiming the rights of priority is incorporated herein by reference in its entirety.

The present invention relates to an oil and/or fat for chocolates.

Background Art

In the production of chocolates, oils and/or fats (hard butters) for chocolates are widely used in place of some or all of the cocoa butter.

An example of a typical type of oil and/or fat for chocolates is a cocoa butter equivalent (CBE) that can be optionally substituted for cocoa butter. CBE is designed to have properties similar to those of chocolate containing cocoa butter as a main component.

In the production of various tempered chocolates, changes in viscosity must be minimized, and preferably, tempering should be achievable without being limited to specific conditions.

Patent Document 1 discloses an invention relating to an oil and/or fat composition for chocolate, the composition thereof preventing the migration of oil and/or fat in a composite confectionery, and being composed of from 40 to 90 wt.% of an oil and/or fat containing 50 wt.% or more of StOSt, and from 10 to 60 wt.% of an oil and/or fat that is in liquid form at 26°C.

Patent Document 1 also indicates that in the composition thereof, the content of SOS type triglyceride is from 45 to 74 wt.%, the StOSt content is 30 wt.% or more, a ratio of StLSt/StOSt is 0.08 or less, a ratio of POO/StOO is 0.60 or more, a total of POP + PPO is 16 wt.% or less, and a ratio of StStO/StOSt is 0.03 or less.

Citation List

Patent Document

Patent Document 1: WO 2013/065726

Summary of Invention

Technical Problem

The object of the present invention is to provide an oil and/or fat for chocolates and a chocolate using the same, with the oil and/or fat exhibiting little change in viscosity over time after a tempering treatment while also having bloom resistance equivalent to that of typical CBE.

Preferably, the present invention provides an oil and/or fat for chocolates, and also a chocolate using the same, with the oil and/or fat thereof being capable of imparting good tempering properties under a wide range of conditions without being limited to specific conditions when a tempering process that is carried out through temperature regulation is adopted.

Solution to Problem

The oil and/or fat composition of Patent Document 1 is obtained by blending a liquid oil for the purpose of imparting low-temperature bloom resistance, and exhibits good physical properties and texture when used in a composite confectionery. However, since the oil and/or fat composition thereof has a high content of StOSt, there is a concern that when the composition is used in tempered chocolates, a large change in viscosity may occur depending on the tempering conditions, and this has been recognized as a problem.

The present inventor conducted an examination based on the technology disclosed in Patent Document 1. As a result, the inventor discovered that, contrary to initial expectations, even when St2O triglyceride is contained at the same content level (from 10 to 50 wt.%) as that of the CBE of prior art, and the proportion of the content of StStO triglyceride accounting for the St2O triglyceride content is 10 wt.% or less, the change in viscosity over time after tempering can be reduced in tempered chocolates by using an oil and/or fat for chocolates in which the P2O triglyceride content is 3 wt.% or more and the proportion of the PPO triglyceride content accounting for the P2O triglyceride content is 23 wt.% or more, and thereby the inventor arrived at the present invention.

That is, the present invention encompasses the following inventions.

(1) An oil and/or fat for chocolates, the oil and/or fat satisfying all of the following requirements (A) to (D):

(A) a content of St2O triglyceride is from 10 to 50 wt.%,
(B) a proportion of a content of StStO triglyceride accounting for the content of St2O triglyceride is 10 wt.% or less,
(C) a content of P2O triglyceride is 3 wt.% or more, and
(D) a proportion of a content of PPO triglyceride accounting for the content of P2O triglyceride is 23 wt.% or more;

provided that St2O triglyceride refers to a triglyceride in which two molecules of stearic acid (St) and one molecule of oleic acid (O) are bonded; StStO triglyceride refers to a triglyceride in which fatty acids bonded at positions 1 and 2 in the triglyceride are stearic acid (St), and a fatty acid bonded at position 3 is oleic acid (O), and a triglyceride in which fatty acids bonded at positions 2 and 3 in the triglyceride are stearic acid (St) and a fatty acid bonded at position 1 is oleic acid (O); P2O triglyceride refers to a triglyceride in which two molecules of palmitic acid (P) and one molecule of oleic acid (O) are bonded; and PPO triglyceride refers to a triglyceride in which fatty acids bonded at positions 1 and 2 in the triglyceride are palmitic acid (P) and a fatty acid bonded at position 3 is oleic acid (O), and a triglyceride in which fatty acids bonded at positions 2 and 3 in the triglyceride are palmitic acid (P) and a fatty acid bonded at position 1 is oleic acid (O).

(2) The oil and/or fat for chocolates according to (1), wherein (E) a proportion of palmitic acid at position 2 relative to the total palmitic acid in the oil and/or fat is 9 wt.% or more;
provided that the total palmitic acid content in the oil and/or fat refers to the palmitic acid content in a constituent fatty acid composition at all of position 1 ($\alpha$-position), position 2 ($\beta$-position), and position 3 ($\gamma$-position) among the triglycerides in the oil and/or fat (hereinafter, the palmitic acid content thereof is referred to as the "palmitic acid content in the total"), and the proportion of palmitic acid at position 2 relative to the total palmitic acid in the oil and/or fat is calculated by the following calculation equation using the palmitic acid content in the total and the palmitic acid content in the fatty acid composition and constituting position 2 ($\beta$-position) of the triglyceride of the oil and/or fat (hereinafter, the palmitic acid content thereof is referred to as the "content of palmitic acid bonded at position 2"):

$$\text{content (\%) of palmitic acid bonded at position } 2 \div (\text{palmitic acid content (\%) in total} \times 3) \times 100.$$

(3) The oil and/or fat for chocolates according to (1), wherein (F) a total of 1,3-StSt-diglyceride content and 1,2-StSt-diglyceride content is 0.25 wt.% or less;
provided that 1,3-StSt-diglyceride refers to a diglyceride in which fatty acids at positions 1 and 3 are stearic acid (St), and 1,2-StSt-diglyceride refers to a diglyceride in which fatty acids at positions 1 and 2 or at positions 2 and 3 are stearic acid (St).

(4) The oil and/or fat for chocolates according to (2), wherein (F) a total of 1,3-StSt-diglyceride content and 1,2-StSt-diglyceride content is 0.25 wt.% or less;
provided that 1,3-StSt-diglyceride refers to a diglyceride in which fatty acids at positions 1 and 3 are stearic acid (St), and 1,2-StSt-diglyceride refers to a diglyceride in which fatty acids at positions 1 and 2 or at positions 2 and 3 are stearic acid (St).

(5) A chocolate containing from 0.5 to 20 wt.% of the oil and/or fat for chocolates described in (1) to (4).

(6) The oil and/or fat for chocolates according to (1) to (4), containing at least an oil and/or fat X and an oil and/or fat Y satisfying the following requirements:

oil and/or fat X: the content of St2O triglyceride is 39 wt.% or more, and a proportion of the content of StStO triglyceride accounting for the content of St2O triglyceride is 10 wt.% or less, and
oil and/or fat Y: the content of P2O triglyceride is 5 wt.% or more, and a proportion of the content of PPO triglyceride accounting for the content of P2O triglyceride is 23 wt.% or more.

(7) The oil and/or fat for chocolates according to (6), wherein a total of 1,3-StSt-diglyceride content and 1,2-StSt-diglyceride content in the oil and/or fat X is 0.4 wt.% or less;
provided that 1,3-StSt-diglyceride refers to a diglyceride in which fatty acids at positions 1 and 3 are stearic acid (St), and 1,2-StSt-diglyceride refers to a diglyceride in which fatty acids at positions 1 and 2 or at positions 2 and 3 are stearic acid (St).

(8) A method for producing an oil and/or fat for chocolates, the method including mixing an oil and/or fat X and an oil and/or fat Y satisfying the following requirements:

oil and/or fat X: a content of St2O triglyceride is 39 wt.% or more, and a proportion of a content of StStO triglyceride accounting for the content of St2O triglyceride is 10 wt.% or less, and

oil and/or fat Y: a content of P2O triglyceride is 5 wt.% or more, and a proportion of a content of PPO triglyceride accounting for the content of P2O triglyceride is 23 wt.% or more;

provided that St2O triglyceride refers to a triglyceride in which two molecules of stearic acid (St) and one molecule of oleic acid (O) are bonded; StStO triglyceride refers to a triglyceride in which fatty acids bonded at positions 1 and 2 in the triglyceride are stearic acid (St), and a fatty acid bonded at position 3 is oleic acid (O), and a triglyceride in which fatty acids bonded at positions 2 and 3 in the triglyceride are stearic acid (St) and a fatty acid bonded at position 1 is oleic acid (O); P2O triglyceride refers to a triglyceride in which two molecules of palmitic acid (P) and one molecule of oleic acid (O) are bonded; and PPO triglyceride refers to a triglyceride in which fatty acids bonded at positions 1 and 2 in the triglyceride are palmitic acid (P) and a fatty acid bonded at position 3 is oleic acid (O), and a triglyceride in which fatty acids bonded at positions 2 and 3 in the triglyceride are palmitic acid (P) and a fatty acid bonded at position 1 is oleic acid (O).

(9) The method for producing an oil and/or fat for chocolates according to (8), wherein a total of a content of 1,3-StSt-diglyceride and a content of 1,2-StSt-diglyceride in the oil and/or fat X is 0.4 wt.% or less;

provided that 1,3-StSt-diglyceride refers to a diglyceride in which fatty acids at positions 1 and 3 are stearic acid (St), and 1,2-StSt-diglyceride refers to a diglyceride in which fatty acids at positions 1 and 2 or at positions 2 and 3 are stearic acid (St).

(10) The method for producing an oil and/or fat for chocolates according to (8) or (9), wherein a production process includes a diglyceride reduction treatment.

(11) A method for producing a chocolate, the method including preparing a chocolate batter containing from 0.5 to 20 wt.% of the oil and/or fat for chocolates described in (1) to (4), and tempering and solidifying the batter.

(12) A method for reducing a change in viscosity of a chocolate over time after a tempering treatment by using, in a tempered chocolate, an oil and/or fat for chocolates with the oil and/fat satisfying all of the following requirements (A) to (D):

(A) a content of St2O triglyceride is from 10 to 50 wt.%,

(B) a proportion of a content of StStO triglyceride accounting for the content of St2O triglyceride is 10 wt.% or less,

(C) a content of P2O triglyceride is 3 wt.% or more, and

(D) a proportion of a content of PPO triglyceride accounting for the content of P2O triglyceride is 23 wt.% or more;

provided that St2O triglyceride refers to a triglyceride in which two molecules of stearic acid (St) and one molecule of oleic acid (O) are bonded; StStO triglyceride refers to a triglyceride in which fatty acids bonded at positions 1 and 2 in the triglyceride are stearic acid (St), and a fatty acid bonded at position 3 is oleic acid (O), and a triglyceride in which fatty acids bonded at positions 2 and 3 in the triglyceride are stearic acid (St) and a fatty acid bonded at position 1 is oleic acid (O); P2O triglyceride refers to a triglyceride in which two molecules of palmitic acid (P) and one molecule of oleic acid (O) are bonded; and PPO triglyceride refers to a triglyceride in which fatty acids bonded at positions 1 and 2 in the triglyceride are palmitic acid (P) and a fatty acid bonded at position 3 is oleic acid (O), and a triglyceride in which fatty acids bonded at positions 2 and 3 in the triglyceride are palmitic acid (P) and a fatty acid bonded at position 1 is oleic acid (O).

Advantageous Effects of Invention

According to the present invention, an oil and/or fat for chocolates with the oil and/or fat exhibiting little change in viscosity over time after a tempering treatment while also having bloom resistance equivalent to that of typical CBE, and also a chocolate using the same can be provided.

Preferably, the present invention can provide an oil and/or fat for chocolates, and also a chocolate using the same, with the oil and/or fat thereof having good tempering properties under a wide range of tempering conditions.

Description of Embodiments

The present invention will be described in detail below.

The oil and/or fat for chocolates according to an embodiment of the present invention is an oil and/or fat to be blended into chocolates in place of some cocoa butter or all of the cocoa butter, and is generally referred to as a hard butter.

The types of hard butter generally include a cocoa butter equivalent (CBE), a cocoa butter improver (CBI), a cocoa butter substitute (CBS), a cocoa butter replacer (CBR), and the like, and the present invention particularly corresponds to a CBE and a CBI. That is, the oil and/or fat according to an embodiment of the present invention is a tempering type oil and/or fat that can be optionally substituted for cocoa butter.

The term "tempering type oil and/or fat" as used herein means an oil and/or fat that requires a tempering operation in the production of a chocolate using the oil and/or fat. Examples of the tempering operation include an operation of dispersing, in a molten chocolate batter, a certain amount of a seeding agent containing a crystal of a SUS type triglyceride in a stable state, and an operation of subjecting a molten chocolate batter to appropriate temperature regulation. By performing such a tempering operation, a chocolate having a favorable appearance without the occurrence of bloom can be produced.

The oil and/or fat for chocolates according to an embodiment of the present invention is preferably non-lauric and non-trans.

The term "non-lauric" as used herein means that a lauric-based oil and/or fat such as coconut oil and palm kernel oil are not substantially used as raw materials. The term lauric-based oil and/or fat as used herein refers to an oil and/or fat in which the content of a fatty acid having 12 carbons in the fatty acid composition constituting the oil and/or fat is 30 wt.% or more, and the content thereof is preferably from 35 to 65 wt.%, from 40 to 60 wt.%, or from 40 to 50 wt.%. Accordingly, more specifically, the content of fatty acids having 12 carbons in the fatty acid composition constituting the oil and/or fat for chocolates is preferably less than 5 wt.%, more preferably less than 3 wt.%, still more preferably less than 2 wt.%, and most preferably less than 1 wt.%.

The term "non-trans" as used herein means that an oil and/or fat containing a trans fatty acid, such as a hydrogenated oil (excluding an extremely hydrogenated oil), is not substantially used as a raw material. Specifically, the trans fatty acid content in the fatty acid composition constituting the oil and/or fat for chocolates is preferably 5 wt.% or less, and more preferably 4 wt.% or less, 3 wt.% or less, 2 wt.% or less, or 1 wt.% or less.

The oil and/or fat for chocolates according to an embodiment of the present invention is characterized by satisfying all of the following requirements (A) to (D).

(A) A content of St2O triglyceride is from 10 to 50 wt.%.

(B) A proportion of a content of StStO triglyceride accounting for the content of St2O triglyceride is 10 wt.% or less.

(C) A content of P2O triglyceride is 3 wt.% or more.

(D) A proportion of a content of PPO triglyceride accounting for the content of P2O triglyceride is 23 wt.% or more.

Here, St2O triglyceride refers to a triglyceride in which two molecules of stearic acid (St) and one molecule of oleic acid (O) are bonded; StStO triglyceride refers to a triglyceride in which fatty acids bonded at positions 1 and 2 in the triglyceride are stearic acid (St), and a fatty acid bonded at position 3 is oleic acid (O), and a triglyceride in which fatty acids bonded at positions 2 and 3 in the triglyceride are stearic acid (St) and a fatty acid bonded at position 1 is oleic acid (O); P2O triglyceride refers to a triglyceride in which two molecules of palmitic acid (P) and one molecule of oleic acid (O) are bonded; and PPO triglyceride refers to a triglyceride in which fatty acids bonded at positions 1 and 2 in the triglyceride are palmitic acid (P) and a fatty acid bonded at position 3 is oleic acid (O), and a triglyceride in which fatty acids bonded at positions 2 and 3 in the triglyceride are palmitic acid (P) and a fatty acid bonded at position 1 is oleic acid (O).

Requirement (A) stipulates that the St2O triglyceride content is from 10 wt.% to 50 wt.%, but the lower limit thereof is preferably 20 wt.% or more or 25 wt.% or more, and the upper limit thereof is preferably 40 wt.% or less or 35 wt.% or less.

Requirement (B) stipulates that the proportion of the StStO triglyceride content accounting for the St2O triglyceride content is 10 wt.% or less, but the upper limit thereof is preferably 8 wt.% or less, 6 wt.% or less, 5 wt.% or less, 4 wt.% or less, or 3 wt.% or less.

Requirement (C) stipulates that the P2O triglyceride content is 3 wt.% or more, but the lower limit thereof is preferably 4 wt.% or more, 5 wt.% or more, or 6 wt.% or more, and the upper limit thereof is preferably 40 wt.% or less, 30 wt.% or less, 20 wt.% or less, or 15 wt.% or less.

Requirement (D) stipulates that the proportion of the content of PPO triglyceride accounting for the content of P2O triglyceride is 23 wt.% or more, but the lower limit thereof is preferably 23.5 wt.% or more, 24 wt.% or more, 24.5 wt.% or more, 25 wt.% or more, 30 wt.% or more, 35 wt.% or more, 40 wt.% or more, 45 wt.% or more, 50 wt.% or more, 55 wt.% or more, or 60 wt.% or more, and the upper limit thereof is preferably 80 wt.% or less, or 70 wt.% or less.

When all of the contents are appropriately within these ranges, the effects of the present invention can be further exhibited.

The oil and/or fat for chocolates according to an embodiment of the present invention preferably further satisfies the following requirement (E).

(E) A proportion of palmitic acid at position 2 relative to the total palmitic acid in the oil and/or fat is 9 wt.% or more.

Here, the total palmitic acid content in the oil and/or fat refers to the palmitic acid content in a constituent fatty acid composition at all of position 1 (α-position), position 2 (β-position), and position 3 (γ-position) among the triglycerides in the oil and/or fat (hereinafter, the palmitic acid content thereof is referred to as the "palmitic acid content in the total"), and the proportion of palmitic acid at position 2 relative to the total palmitic acid in the oil and/or fat is calculated by the following calculation equation using the palmitic acid content in the total and the palmitic acid content in the fatty acid composition and constituting position 2 (β-position) of the triglyceride of the oil and/or fat (hereinafter, the palmitic acid content thereof is referred to as the "content of palmitic acid bonded at position 2").

$$\text{Content (\%) of palmitic acid bonded at position } 2 \div (\text{palmitic acid content (\%) in total} \times 3) \times 100$$

Requirement (E) stipulates that the proportion of the content of palmitic acid at position 2 to the total palmitic acid content in the oil and/or fat is preferably 9 wt.% or more, but the lower limit thereof is more preferably 10 wt.% or more, 12 wt.% or more, 14 wt.% or more, 16 wt.% or more, 18 wt.% or more, 20 wt.% or more, or 22 wt.% or more, and the upper limit thereof is more preferably 80 wt.% or less, 70 wt.% or less, 60 wt.% or less, 50 wt.% or less, 40 wt.% or less, 35 wt.% or less, or 30 wt.% or less.

When the proportion is appropriately within the above range, the effects of the present invention can be further exhibited.

The oil and/or fat for chocolates according to an embodiment of the present invention preferably further satisfies the following requirement (F).

(F) A total of 1,3-StSt-diglyceride content and 1,2-StSt-diglyceride content is 0.25 wt.% or less.

Here, 1,3-StSt-diglyceride refers to a diglyceride in which the fatty acids at positions 1 and 3 are stearic acid (St), and 1,2-StSt-diglyceride refers to a diglyceride in which the fatty acids at positions 1 and 2 or at positions 2 and 3 are stearic acid (St).

The total of the 1,3-StSt-diglyceride content and the 1,2-StSt-diglyceride content stipulated in requirement (F) is more preferably less than 0.25 wt.%, 0.20 wt.% or less, or less than 0.20 wt.%.

When the total content is appropriately within the above range, the effects of the present invention can be further exhibited.

The oil and/or fat for chocolates according to an embodiment of the present invention preferably further satisfies the following requirement (G).

(G) An SSS triglyceride content is 2 wt.% or less.

Here, SSS triglyceride refers to a triglyceride in which three molecules of saturated acids (S) having 16 or 18 carbons are bonded together.

The SSS triglyceride content of requirement (G) is more preferably 1.8 wt.% or less, 1.5 wt.% or less, 1.2 wt.% or less, or 1 wt.% or less.

When the content thereof is appropriately within this range, a chocolate having excellent meltability in the mouth and flavor expression can be obtained.

The oil and/or fat for chocolates according to an embodiment of the present invention preferably further satisfies the following requirement (H).

(H) A UUU triglyceride content is 2 wt.% or more.

Here, UUU triglyceride refers to a triglyceride in which three molecules of an unsaturated saturated acid (U) having 16 or 18 carbons are bonded together.

The UUU triglyceride content stipulated in requirement (H) is more preferably 3 wt.% or more, 3.5 wt.% or more, 4 wt.% or more, or 4.5 wt.% or more.

When the content thereof is appropriately within this range, a chocolate having excellent meltability in the mouth and flavor expression can be obtained.

The oil and/or fat for chocolates according to an embodiment of the present invention preferably further satisfies the following requirement (I).

(I) A proportion of the total of the content of 1,3-StSt-diglyceride and the content of 1,2-StSt-diglyceride to the content of St2O triglyceride is 5 wt.% or less.

Here, St2O triglyceride refers to a triglyceride in which two molecules of stearic acid (St) and one molecule of oleic acid (O) are bonded, 1,3-StSt-diglyceride refers to a diglyceride in which the fatty acids at positions 1 and 3 are stearic acid (St), and 1,2-StSt-diglyceride refers to a diglyceride in which the fatty acids at positions 1 and 2 or at positions 2 and 3 are stearic acid (St).

The proportion of the total of the content of 1,3-StSt-diglyceride and the content of 1,2-StSt-diglyceride to the content of St2O triglyceride as stipulated in requirement (I) is preferably 4 wt.% or less, 3 wt.% or less, 2 wt.% or less, 1 wt.% or less, 0.8 wt.% or less, 0.7 wt.% or less, 0.65 wt.% or less, or 0.6 wt.% or less.

When the proportion is appropriately within the above range, the effects of the present invention can be further exhibited.

The oil and/or fat for chocolates according to an embodiment of the present invention preferably further satisfies the following requirement (J).

(J) A proportion of a content of PPO triglyceride to a content of St2O triglyceride is 7 wt.% or more.

Here, St2O triglyceride refers to a triglyceride in which two molecules of stearic acid (St) and one molecule of oleic acid (O) are bonded, and the PPO triglyceride refers to a triglyceride in which fatty acids bonded at positions 1 and 2 in the triglyceride are each palmitic acid (P) and a fatty acid bonded at position 3 is oleic acid (O), and a triglyceride in which fatty acids bonded at positions 2 and 3 in the triglyceride are each palmitic acid (P) and a fatty acid bonded at position 1 is oleic acid (O).

The proportion of the PPO triglyceride content to the St2O triglyceride content in the requirement (J) is more preferably 8 wt.% or more, 9 wt.% or more, or 10 wt.% or more.

When the proportion is appropriately within the above range, the effects of the present invention can be further exhibited.

The oil and/or fat for chocolates according to an embodiment of the present invention can contain at least an oil and/or fat X and an oil and/or fat Y that satisfy the following requirements.

Oil and/or fat X: The content of St2O triglyceride is 39 wt.% or more, and a proportion of the content of StStO triglyceride accounting for the content of St2O triglyceride is 10 wt.% or less.

Oil and/or fat Y: The content of P2O triglyceride is 5 wt.% or more, and a proportion of the content of PPO triglyceride accounting for the content of P2O triglyceride is 23 wt.% or more.

The lower limit of the St2O triglyceride content in the oil and/or fat X is preferably 40 wt.% or more, 43 wt.% or more, 45 wt.% or more, 48 wt.% or more, 50 wt.% or more, 53 wt.% or more, 55 wt.% or more, 58 wt.% or more, or 60 wt.% or more, and the upper limit thereof is preferably 90 wt.% or less, 88 wt.% or less, 85 wt.% or less, 83 wt.% or less, 80 wt.% or less, 78 wt.% or less, 75 wt.% or less, 73 wt.% or less, or 70 wt.% or less.

At the same time, the lower limit of the proportion of the StStO triglyceride content accounting for the St2O triglyceride content in the oil and/or fat X is preferably 8 wt.% or less, 6 wt.% or less, 5 wt.% or less, 4 wt.% or less, 3 wt.% or less, or 2 wt.% or less.

The lower limit of the P2O triglyceride content in the oil and/or fat Y is preferably 8 wt.% or more, or 10 wt.% or more, and the upper limit thereof is preferably 70 wt.% or less, 68 wt.% or less, 65 wt.% or less, 63 wt.% or less, 60 wt.% or less, 58 wt.% or less, 55 wt.% or less, 53 wt.% or less, 50 wt.% or less, 48 wt.% or less, 45 wt.% or less, 43 wt.% or less, 40 wt.% or less, 38 wt.% or less, 35 wt.% or less, 33 wt.% or less, 30 wt.% or less, 28 wt.% or less, or 25 wt.% or less.

At the same time, the lower limit of the proportion of the PPO triglyceride content accounting for the P2O triglyceride content in the oil and/or fat Y is preferably 23.5 wt.% or more, 24 wt.% or more, 24.5 wt.% or more, 25 wt.% or more, 30 wt.% or more, 35 wt.% or more, 40 wt.% or more, 45 wt.% or more, 50 wt.% or more, 55 wt.% or more, or 60 wt.% or more, and the upper limit thereof is preferably 80 wt.% or less, or 70 wt.% or less.

With the contents being appropriately within these ranges, the effects of the present invention can be further exhibited.

The present invention can also be considered as a method for producing an oil and/or fat for chocolates, the method including mixing the oil and/or fat X and the oil and/or fat Y.

The blending ratio of the oil and/or fat X in the oil and/or fat for chocolates is preferably from 10 wt.% to 65 wt.%. The lower limit of the blending ratio thereof is more preferably 20 wt.% or more, 30 wt.% or more, or 40 wt.% or more. The upper limit thereof is more preferably 60 wt.% or less, or 55 wt.% or less.

Similarly, the blending ratio of the oil and/or fat Y in the oil and/or fat for chocolates is preferably from 20 wt.% to 75 wt.%. The lower limit of the content thereof is more preferably 30 wt.% or more, 40 wt.% or more, or 50 wt.% or more. The upper limit thereof is more preferably 70 wt.% or less, or 60 wt.% or less.

Of course, a plurality of oils and/or fats satisfying the requirement of the oil and/or fat X can be mixed and used, and in this case, the "blending ratio of the oil and/or fat X in the oil and/or fat for chocolates" described herein refers to the total blending amount after mixing the plurality of oils and/or fats. The same applies to the oil and/or fat Y.

The total of the content of 1,3-StSt-diglyceride and the content of 1,2-StSt-diglyceride in the oil and/or fat X contained in the oil and/or fat for chocolates according to an embodiment of the present invention or used in the method for producing an oil and/or fat for chocolates according to an embodiment of the present invention is preferably 0.4 wt.% or less. The total content thereof is more preferably 0.35 wt.% or less, 0.3 wt.% or less, or 0.25 wt.% or less.

When the total content is appropriately within the above range, the effects of the present invention can be further exhibited.

The method for producing an oil and/or fat for chocolates according to an embodiment of the present invention preferably includes a diglyceride reduction treatment in the production process. The method for the diglyceride reduction treatment is not particularly limited, and a known method can be used. Specific examples of known methods include silica gel adsorption and a treatment with partial glyceride lipase.

The diglyceride reduction treatment may be carried out on each of the oil and/or fat raw materials individually, may be carried out on a mixture of any two or more types of the oil and/or fat raw materials, or may be carried out after all the raw materials have been mixed. Through these treatments, the total amount of diglycerides is preferably reduced by 30 wt.% or more, and more preferably by 40 wt.% or more, as compared with the total amount before the treatments.

Of course, when a raw material having a low diglyceride content is used, the production process need not include the diglyceride reduction treatment.

Examples of oils and/or fats used in the oil and/or fat for chocolates according to an embodiment of the present invention include vegetable oils and/or fats, such as soybean oil, high-erucic rapeseed oil, rapeseed oil, corn oil, cottonseed oil, peanut oil, sunflower oil, high-oleic sunflower oil, rice bran oil, palm oil, safflower oil, high-oleic safflower oil, olive oil, sesame oil, flaxseed oil, medium-chain triglyceride oil (MCT), coconut oil, palm kernel oil, shea butter, sal fat, and cocoa butter; animal oils and/or fats, such as milk fat, beef tallow, lard, fish oil, and whale oil; algal oil, oils and/or fats derived from microbial fermentation, and hydrogenated oils, fractionated oils, hydrogenated fractionated oils, and fractionated hydrogenated oils of these oils and/or fats, processed oils subjected to treatments such as interesterification and diglyceride reduction, and mixed oils and/or fats of these.

The oil and/or fat X is not particularly limited as long as the content of St2O triglyceride and the proportion of the content of StStO triglyceride accounting for the content of the St2O triglyceride are within appropriate ranges, but the oil and/or fat X is preferably an oil and/or fat obtained by subjecting an oil and/or fat containing high-oleic sunflower oil to interesterification and a fractionation treatment, and then subjecting the resultant to a diglyceride reduction treatment. Note that, when high-oleic sunflower oil is used, the oleic acid content is preferably 60 wt.% or more in the constituent fatty acid composition.

The oil and/or fat Y is not particularly limited as long as the content of P2O triglyceride and the proportion of the content of PPO triglyceride accounting for the content of the P2O triglyceride are within appropriate ranges, but the oil and/or fat serving as the raw material thereof is preferably palm oil, and is more preferably a processed oil and/or fat obtained by subjecting palm oil to a fractionation treatment.

When the oil and/or fat for chocolates according to an embodiment of the present invention is blended in a chocolate, the usage amount of the oil and/or fat for chocolates according to an embodiment of the present invention is preferably from 0.5 wt.% to 20 wt.% based on the total amount of the chocolate. The lower limit thereof is more preferably 1 wt.% or more, 3 wt.% or more, or 5 wt.% or more, and the upper limit thereof is more preferably 18 wt.% or less, 15 wt.% or less, or 12 wt.% or less.

When the usage amount thereof is appropriately within this range, the effects of the present invention can be further exhibited.

The oil and/or fat for chocolates according to an embodiment of the present invention can be combined with an oil and/or fat derived from a cacao component and/or a milk component, a hard butter, and another oil and/or fat component, and the blending amounts can be appropriately adjusted, and thereby the oil and/or fat for chocolates according to an embodiment of the present invention can be used in chocolates suitable for various applications.

The oil content in the chocolate according to an embodiment of the present invention (not limited to the oil and/or fat for chocolates according to an embodiment of the present invention, but including all oil and/or fat components derived from cacao components, milk components, and other components contained in the chocolate) is preferably from 5 to 75 wt.%. The lower limit thereof is more preferably 10 wt.% or more, or 15 wt.%. Meanwhile, the upper limit of the oil content thereof is more preferably 70 wt.% or less, or 65 wt.%, 60 wt.%, 55 wt.%, or 50 wt.% or less.

When the oil content thereof is appropriately within this range, the effects of the present invention can be further exhibited.

An optional component normally used in chocolate applications, such as a colorant, an emulsifier, an antioxidant, or an aroma agent, can be appropriately added to the chocolate according to an embodiment of the present invention. These optional components are added at an amount of 20 wt.% or less and preferably 10 wt.% or less to the chocolate according to an embodiment of the present invention.

In addition, examples of the emulsifier include a glycerol fatty acid ester, a sucrose fatty acid ester, a sorbitan fatty acid ester, a glycerol organic acid fatty acid ester, a polyglycerol fatty acid ester, and lecithin.

The term "chocolate" according to an embodiment of the present invention is not limited to chocolate, quasi chocolate and chocolate-utilizing food products defined by the Japan National Chocolate Industry Fair Trade Council and the Japan Fair Trade Council of Chocolate-Utilizing Foods, but also entails oil and/or fat-processed foods that contain oil and/or fat as an essential component, use oil and/or fat as a continuous phase, and are produced by using cocoa mass, cocoa, cocoa butter, a cocoa butter alternative, hard butter or the like.

The chocolate according to an embodiment of the present invention can be produced in the same manner as in the production of common chocolate products. As an example, the chocolates can be produced using oils and/or fats, cocoa mass, cocoa butter, sugars, cocoa powder, various powdered foods such as powdered milk, emulsifiers, antioxidants, flavors, and pigments as raw materials, with the production method including processes such as mixing, refining (roll-refining), kneading (conching process), and cooling. Moreover, as another example, the chocolates can be produced using the same raw materials as those listed above, with the production method including processes such as mixing, refining (refining with a ball mill or a bead mill), stirring, and cooling.

The chocolate according to an embodiment of the present invention is preferably a tempered chocolate.

The tempering operation for the chocolate according to an embodiment of the present invention is exemplified below.

One example of an operation for tempering the chocolate is a temperature regulation process. Tempering through temperature regulation can generally be carried out through an operation in which a chocolate batter melted at a temperature from 40 to 50°C is cooled to a product temperature of around 26 to 29°C, and then heated once again to a temperature of around 28 to 31°C.

The temperature regulation process can be carried out using a melting tank for a chocolate batter and a tempering machine. Two types of tempering machines are available including a batch type and a continuous type, and in the batch type, the melting, cooling, and heating can be carried out by regulating the temperature of the tank containing the chocolate batter. The continuous tempering machine is an apparatus that is connected to a melting tank for a chocolate batter and can implement cooling and heating when the chocolate batter is discharged.

As the tempering machine used in the temperature regulation process according to an embodiment of the present invention, a continuous tempering machine is preferably used. When a continuous tempering machine is used, the chocolate batter heated to 42°C or higher can be continuously supplied to the tempering machine, and molded chocolates with suppressed bloom formation can be continuously produced.

The continuous tempering machine can adjust the flow rate at which the chocolate batter is discharged, and can regulate the temperature of a refrigerant used for cooling, and the temperature of a heating medium used for heating.

The flow rate of the discharged liquid, the temperature of the refrigerant, and the temperature of the heating medium can be appropriately adjusted according to the apparatus used in the subsequent molding operation. As an example, when a tempering machine available from Aasted ApS is used, the flow rate of the discharged chocolate liquid can be adjusted to a range from 1000 to 1500 kg/h, water can be used as the refrigerant and the heating medium, the refrigerant temperature can be regulated to a range from 5 to 20°C, and the temperature of the heating medium can be regulated to a range from 31 to 40°C.

Another example of a chocolate tempering operation is a method that uses a seeding agent. The seeding agent contains a crystal of an SUS-type triglyceride in a stable state. Examples of the SUS-type triglyceride include StOSt crystals (1,3-distearoyl-2-oleoylglycerol) and BOB crystals (1,3-dibehenoyl-2-oleoylglycerol).

By dispersing a certain amount of the seeding agent in a molten chocolate having a temperature of from 30°C to 35°C, an effect equivalent to that of the operation of carrying out temperature regulation can be obtained.

If the change in viscosity of the chocolate over time can be reduced after these tempering treatments, an advantage is achieved in a case in which, for example, a chocolate coating is applied (enrobing operation) to a baked confectionery such as a biscuit or cracker, or to a confectionery ingredient such peanuts or other such nuts. In the enrobing operation, uniform coating is possible by using a chocolate batter having an appropriate yield value, and thus it is desirable that the chocolate batter be able to maintain a low viscosity for a long period of time after the tempering treatment. Furthermore, it is anticipated that the complicated process of regulating the temperature of the chocolate batter during the enrobing operation will become unnecessary.

In addition, if appropriate tempering can be obtained through these tempering operations, crystal nuclei of stable crystals of the oil and/or fat can be generated. This offers several advantages, such as easier mold release after molding, or long-term maintenance of stable crystals of the oil and/or fat, which suppresses the development of bloom on the chocolate surface.

On the other hand, if appropriate tempering cannot be achieved, there is a concern regarding drawbacks, such as difficulty in mold release after molding, or the appearance of bloom on the surface of the chocolate due to unstable crystals of oils and/or fats and subsequent crystal transformation.

On the other hand, in the tempering operation through the temperature regulation process in particular, depending on the adopted tempering conditions, the viscosity may be high even immediately after the tempering operation, resulting in significantly poor workability. The tempering operation based on temperature regulation includes a process of lowering the product temperature of the melted chocolate batter to a minimum temperature point and a process of raising the temperature of the melted chocolate batter to the reheating temperature once again. Here, if crystals are precipitated more than necessary in the process of lowering the temperature to the minimum temperature point, many unstable crystals remain even when the temperature is raised to the reheating temperature. An excessive amount of crystals contained in a chocolate may cause an increase in viscosity, which can ultimately result in a significant deterioration in workability. In addition, the presence of unstable crystals that remain during heating to the reheating temperature may be a factor contributing to poor mold release properties in molding or the occurrence of bloom immediately after storage.

Therefore, particularly when a tempering operation based on temperature regulation is adopted, it is desirable that the oil and/or fat for chocolates not be limited to specific temperature regulation conditions, but rather possess properties that do not impair workability under a wide range of conditions, do not hinder releasability, and do not cause blooming to occur immediately after storage.

The present invention can also be considered as a method for reducing a change in viscosity of a chocolate over time by using, in a tempered chocolate, an oil and/or fat for chocolates with the oil and/or fat satisfying all of the following requirements (A) to (D).

(A) A content of St2O triglyceride is from 10 to 50 wt.%.

(B) A proportion of a content of StStO triglyceride accounting for the content of St2O triglyceride is 10 wt.% or less.

(C) A content of P2O triglyceride is 3 wt.% or more.

(D) A proportion of a content of PPO triglyceride accounting for the content of P2O triglyceride is 23 wt.% or more.

Examples

Hereinafter, the present invention will be described in more detail with reference to examples of the present invention, but the spirit of the present invention is not limited to the following examples. In the examples, values in %, parts, and ratios are all on a weight basis.

■ Method for Measuring Total Constituent Fatty Acid Composition of Oil and/or Fat

The total constituent fatty acid composition of oil and/or fat was measured in accordance with the JOCS Standard Methods for the Analysis of Fats, Oils and Related Materials 2.4.2.1-2013.

■ Method for Measuring Position-2 Fatty Acid Composition of Oil and/or Fat and Method for Calculating Position-2 Ratio

The fatty acid composition at position 2 of the oil and/or fat was analyzed according to the description in the following document.

Reference document: Y. Watanabe, et al., "Enzymatic Analysis of Positional Fatty Acid Distributions in Triacylglycerols by 1(3)-Selective Transesterification with Candida antarctica Lipase B: a Collaborative Study", J. of Oleo Science, Vol. 64, p. 1193-1205 (2015)

Using the obtained analysis values, the proportion of palmitic acid at position 2 relative to all palmitic acid in the oil and/or fat was calculated by the equation of <content (%) of palmitic acid bonded at position $2 \div$ (palmitic acid content (%) in total $\times$ 3) $\times$ 100>.

■ Method for Measuring Triglyceride Composition of Oil and/or Fat

The triglyceride content of the oil and/or fat can be measured by the following high-performance liquid chromatography (1), and can be determined as the sum of symmetric and asymmetric triglyceride (for example, the sum of the POP content and the PPO content, that is, the P2O content), which is a specific triglyceride compositional percentage. Further, the composition of symmetric and asymmetric triglyceride can be measured by high-performance liquid chromatography (2), and the proportion of asymmetric triglyceride (for example, the proportional percentage of the PPO triglyceride content to the P2O triglyceride content) can be determined.

The measurement by high-performance liquid chromatography (1) was conducted under the conditions of (column: ODS, eluent: acetone/acetonitrile = 80/20, liquid volume: 0.9 mL/min, column temperature: 25°C, and detector: differential refractometer).

The high-performance liquid chromatography (2) was carried out according to the method described in J. High Resol. Chromatogr., 18, 105-107 (1995), ADLOF R.O., "Analysis of Triacylglycerol Positional Isomers by Silver Ion High Performance Liquid Chromatography".

■ Oil and/or Fat X1

An oil and/or fat X1 having St2O as a main component was obtained by interesterifying high oleic sunflower oil and stearic acid using lipase having 1,3-position specificity, after which the resultant product was fractionated under specific conditions and then decolored and deodorized by commonly used methods.

■ Oil and/or Fat X2

The oil and/or fat X1 was subjected to a diglyceride reduction treatment, and an oil and/or fat X2 was thereby obtained.

■ Oil and/or Fat X3

An oil and/or fat X3 was obtained in the same manner as the oil and/or fat X1 with the exception that the specific conditions for fractionation were changed (and the diglyceride reduction treatment was not carried out).

■ Oil and/or Fat Y1

A random interesterified oil and/or fat obtained from only a non-lauric oil and/or fat containing a palm-based oil and/or fat as a main component was fractionated, and the obtained low-melting point fraction was decolored and deodorized by commonly used methods, and thereby an oil and/or fat Y1 was obtained.

■ Oil and/or Fat Y2

The oil and/or fat Y1 was subjected to a diglyceride reduction treatment, and an oil and/or fat Y2 was thereby obtained.

■ Oil and/or Fat Y3

A palm mid-fraction (PMF) having an iodine value of 45 was fractionated, and the obtained low-melting point fraction was decolored and deodorized by commonly used methods, and then subjected to a diglyceride reduction treatment, and an oil and/or fat Y3 was thereby obtained.

■ Oil and/or Fat Y4

Palm olein (iodine value: 57) was used as an oil and/or fat Y4.

■ Oil and/or Fat Y5

Palm super olein (iodine value: 67) was used as an oil and/or fat Y5.

■ Diglyceride Reduction Treatment

A diglyceride reduction treatment for obtaining the oil and/or fat X2, the oil and/or fat Y2, and the oil and/or fat Y3 was carried out by the following method.

1. Fifteen parts by weight of the oil and/or fat was added to 85 parts by weight of hexane and mixed.
2. Three parts by weight of silica gel ("Wakogel C-100" available from Wako Pure Chemical Industries, Ltd.) was added to 100 parts by weight of the mixture, the mixture was stirred in a hot water bath, and the silica gel was removed by suction filtration.
3. After 2, the remaining hexane was removed using an evaporator.

For the oils and/or fats X1 to X3 and the oils and/or fats Y1 to Y5, the measured values of the St2O triglyceride content, the StStO triglyceride content, the proportion of the StStO triglyceride content accounting for the St2O triglyceride content (referred to as the StStO/St2O proportion% in the table, same hereinafter), the P2O triglyceride content, the PPO triglyceride content, the proportion of the PPO triglyceride content accounting for the P2O triglyceride content (referred to in the table as PPO/P2O proportion%, same hereinafter), and the total of the 1,3-StSt-diglyceride content and the 1,2-StSt-diglyceride content (referred to in the table as StSt-DG, same hereinafter) are shown in Table 1.

However, when the St2O triglyceride content was low, the StStO triglyceride content and the StStO/St2O proportion% were not shown from the viewpoint of measuring accuracy. Likewise, when the P2O triglyceride content was low, the PPO triglyceride content and the PPO/P2O proportion% were not shown from the viewpoint of measuring accuracy.

■ Table 1

| | St2O | StStO | StStO/St2O proportion% | P2O | PPO | PPO/P2O proportion% | StSt-DG |
|---|---|---|---|---|---|---|---|
| Oil and/or fat X1 | 66.9 | 1.0 | 1.5 | 0.4 | - | - | 0.56 |
| Oil and/or fat X2 | 67.4 | 1.0 | 1.5 | 0.5 | - | - | 0.17 |
| Oil and/or fat X3 | 73.6 | 0.7 | 1.0 | 1.7 | - | - | 0.60 |
| Oil and/or fat Y1 | 0.6 | - | - | 12.0 | 8.0 | 66.7 | 0.18 |
| Oil and/or fat Y2 | 0.7 | - | - | 12.6 | 8.4 | 66.7 | 0.17 |
| Oil and/or fat Y3 | 0.4 | - | - | 23.0 | 5.8 | 25.2 | 0.08 |

(continued)

|  | St2O | StStO | StStO/St2O proportion% | P2O | PPO | PPO/P2O proportion% | StSt-DG |
|---|---|---|---|---|---|---|---|
| Oil and/or fat Y4 | 0.6 | - | - | 26.8 | 3.5 | 13.1 | 0.00 |
| Oil and/or fat Y5 | 0.2 | - | - | 11.1 | 2.5 | 22.5 | 0.12 |

Oils and/or fats for chocolates of Examples 1 to 4 and Comparative Examples 1 and 2 were obtained by blending the oils and/or fats X1 to X3 and the oils and/or fats Y1 to Y5 according to the formulations shown in Table 2.

■ Table 2: Formulations of Oils and/or Fats for Chocolates

|  | Example 1 of oil and/or fat for chocolates | Example 2 of oil and/or fat for chocolates | Example 3 of oil and/or fat for chocolates | Example 4 of oil and/or fat for chocolates | Comparative Example 1 of oil and/or fat for chocolates | Comparative Example 2 of oil and/or fat for chocolates |
|---|---|---|---|---|---|---|
| Oil and/or fat X1 |  |  |  | 45 | 50 |  |
| Oil and/or fat X2 | 45 | 45 | 45 |  |  |  |
| Oil and/or fat X3 |  |  |  |  |  | 45 |
| Oil and/or fat Y1 |  |  | 55 |  |  |  |
| Oil and/or fat Y2 | 55 |  |  | 55 |  |  |
| Oil and/or fat Y3 |  | 55 |  |  |  |  |
| Oil and/or fat Y4 |  |  |  |  | 50 |  |
| Oil and/or fat Y5 |  |  |  |  |  | 55 |

In addition to the vegetable oils and/or fats (oils and/or fats for chocolates of Examples 1 to 4 and Comparative Examples 1 and 2) having the formulations shown in Table 2, cocoa butter ("Cocoa Butter 201" available from Fuji Oil Co., Ltd.) was prepared as an oil and/or fat for chocolates of Comparative Example 3.

The triglyceride composition, the PPO/P2O proportion%, the StStO/St2O proportion%, the proportion of the total of the 1,3-StSt-diglyceride content and the 1,2-StSt-diglyceride content accounting for the St2O triglyceride content (referred to as the StSt-DG/St2O proportion% in the table), and the proportion of the PPO triglyceride content accounting for the St2O triglyceride content (referred to as the PPO/StStO proportion% in the table) of the oils and/or fats for chocolates of Examples 1 to 4 and Comparative Examples 1 to 3 are shown in Table 3.

Similarly, the total constituent fatty acid composition, the position-2 fatty acid composition, and the proportion of palmitic acid at position 2 in relation to the total palmitic acid of these oils and/or fats for chocolates of Examples 1 to 4 and Comparative Examples 1 and 2 are shown in Table 4.

■ Table 3

|  | Example 1 of oil and/or fat for chocolates | Example 2 of oil and/or fat for chocolates | Example 3 of oil and/or fat for chocolates | Example 4 of oil and/or fat for chocolates | Comparative Example 1 of oil and/or fat for chocolates | Comparative Example 2 of oil and/or fat for chocolates | Comparative Example 3 of oil and/or fat for chocolates |
|---|---|---|---|---|---|---|---|
| StSt-DG | 0.16 | 0.12 | 0.17 | 0.34 | 0.28 | 0.33 | 0.18 |
| DG Total | 6.8 | 5.8 | 9.1 | 7.3 | 4.2 | 4.4 | 2.5 |
| PO2 | 14.6 | 12.4 | 14.0 | 14.7 | 12.3 | 18.6 | 2.7 |
| P2O | 7.2 | 12.9 | 6.8 | 7.1 | 13.6 | 6.9 | 15.7 |
| StO2 | 7.3 | 5.2 | 7.0 | 7.2 | 5.3 | 3.7 | 3.7 |
| St2O | 30.7 | 30.5 | 30.6 | 30.5 | 33.7 | 33.2 | 26.0 |
| PStO | 6.9 | 6.8 | 6.8 | 6.7 | 7.8 | 5.0 | 38.4 |
| PPO | 4.6 | 3.2 | 4.4 | 4.6 | 1.7 | 1.4 | 0.8 |

(continued)

| | Example 1 of oil and/or fat for chocolates | Example 2 of oil and/or fat for chocolates | Example 3 of oil and/or fat for chocolates | Example 4 of oil and/or fat for chocolates | Comparative Example 1 of oil and/or fat for chocolates | Comparative Example 2 of oil and/or fat for chocolates | Comparative Example 3 of oil and/or fat for chocolates |
|---|---|---|---|---|---|---|---|
| StStO | 0.7 | 0.5 | 0.7 | 0.7 | 0.5 | 0.4 | 0.0 |
| S2O | 44.8 | 50.2 | 44.3 | 44.3 | 55.1 | 45.0 | 80.2 |
| SSS | 0.8 | 0.8 | 0.8 | 0.8 | 0.9 | 0.9 | 1.5 |
| UUU | 8.2 | 5.0 | 8.0 | 8.1 | 5.7 | 7.4 | 0.9 |
| PPO/P2O proportion% | 64.6 | 25.0 | 64.5 | 64.9 | 12.8 | 20.1 | 4.8 |
| StStO/St2O proportion% | 2.3 | 1.7 | 2.2 | 2.3 | 1.6 | 1.1 | 0.0 |
| StSt-DG/St2O proportion% | 0.52 | 0.39 | 0.55 | 1.12 | 0.83 | 0.99 | 0.7 |
| PPO/St2O proportion% | 15.1 | 10.5 | 14.4 | 15.2 | 5.2 | 4.2 | 2.9 |

■ Table 4

| | | Example 1 of oil and/or fat for chocolates | Example 2 of oil and/or fat for chocolates | Example 3 of oil and/or fat for chocolates | Example 4 of oil and/or fat for chocolates | Comparative Example 1 of oil and/or fat for chocolates | Comparative Example 2 of oil and/or fat for chocolates |
|---|---|---|---|---|---|---|---|
| Total constituent fatty acid composition % | C12 | 0.1 | 0.1 | 0.1 | 0.1 | 0.1 | 0.1 |
| | C14 | 0.5 | 0.7 | 0.5 | 0.5 | 0.4 | 0.5 |
| | C16 | 19.0 | 25.8 | 19.2 | 18.8 | 22.3 | 20.0 |
| | C16:1 | 0.1 | 0.1 | 0.1 | 0.1 | 0.1 | 0.2 |
| | C18 | 29.8 | 28.2 | 29.8 | 30.0 | 31.0 | 28.6 |
| | C18:1-t | 0.3 | 0.2 | 0.3 | 0.4 | 0.2 | 0.2 |
| | C18:1-c | 42.4 | 36.8 | 42.2 | 42.3 | 38.6 | 41.1 |
| | C18:2-t | 0.1 | 0.2 | 0.2 | 0.1 | 0.2 | 0.3 |
| | C18:2-c | 6.7 | 6.9 | 6.6 | 6.7 | 5.9 | 8.1 |
| | C18:3-c | 0.1 | 0.1 | 0.1 | 0.1 | 0.1 | 0.1 |
| | C20 | 0.3 | 0.4 | 0.4 | 0.3 | 0.4 | 0.4 |
| | C20:1 | 0.1 | 0.0 | 0.1 | 0.1 | 0.1 | 0.1 |
| | C22 | 0.4 | 0.4 | 0.5 | 0.4 | 0.5 | 0.4 |
| | C24 | 0.1 | 0.1 | 0.1 | 0.1 | 0.1 | 0.0 |

(continued)

| | | Example 1 of oil and/or fat for chocolates | Example 2 of oil and/or fat for chocolates | Example 3 of oil and/or fat for chocolates | Example 4 of oil and/or fat for chocolates | Comparative Example 1 of oil and/or fat for chocolates | Comparative Example 2 of oil and/or fat for chocolates |
|---|---|---|---|---|---|---|---|
| Position-2 fatty acid composition % | C12:0 | 0.1 | 0.0 | 0.0 | 0.1 | 0.1 | 0.1 |
| | C14:0 | 0.4 | 0.3 | 0.4 | 0.4 | 0.2 | 0.2 |
| | C16:0 | 13.8 | 9.1 | 13.6 | 14.0 | 4.7 | 4.7 |
| | C16:1 | 0.1 | 0.0 | 0.0 | 0.1 | 0.0 | 0.1 |
| | C18:0 | 4.0 | 2.2 | 4.0 | 4.1 | 2.0 | 2.0 |
| | C18:1-t | 0.3 | 0.1 | 0.1 | 0.3 | 0.1 | 0.0 |
| | C18:1-c | 72.7 | 73.3 | 73.2 | 72.6 | 80.6 | 76.8 |
| | C18:2-t | 0.0 | 0.4 | 0.0 | 0.0 | 0.2 | 0.4 |
| | C18:2-c | 8.5 | 14.7 | 8.4 | 8.4 | 12.0 | 15.7 |
| | C18:3 | 0.0 | 0.0 | 0.2 | 0.0 | 0.0 | 0.0 |
| Proportion% of palmitic acid at position 2 relative to total palmitic acid | | 24.2 | 11.7 | 23.6 | 24.8 | 7.1 | 7.9 |

In the tables, the number following C in the fatty acid notation indicates the number of carbons, the number to the right of the colon ":" indicates the number of double bonds, the letter t further following the number of double bonds when a double bond is present in the fatty acid indicates the trans form, and the letter c indicates the cis form.

The oils and/or fats for chocolates of Examples 1 to 4 and Comparative Examples 1 to 3 were evaluated with regard to the following requirements (A) to (D).

(A) A content of St2O triglyceride is from 10 to 50 wt.%.

(B) A proportion of a content of StStO triglyceride accounting for the content of St2O triglyceride is 10 wt.% or less.

(C) A content of P2O triglyceride is 3 wt.% or more.

(D) A proportion of a content of PPO triglyceride accounting for the content of P2O triglyceride is 23 wt.% or more.

Here, St2O triglyceride refers to a triglyceride in which two molecules of stearic acid (St) and one molecule of oleic acid (O) are bonded; StStO triglyceride refers to a triglyceride in which fatty acids bonded at positions 1 and 2 in the triglyceride are stearic acid (St), and a fatty acid bonded at position 3 is oleic acid (O), and a triglyceride in which fatty acids bonded at positions 2 and 3 in the triglyceride are stearic acid (St) and a fatty acid bonded at position 1 is oleic acid (O); P2O triglyceride refers to a triglyceride in which two molecules of palmitic acid (P) and one molecule of oleic acid (O) are bonded; and PPO triglyceride refers to a triglyceride in which fatty acids bonded at positions 1 and 2 in the triglyceride are palmitic acid (P) and a fatty acid bonded at position 3 is oleic acid (O), and a triglyceride in which fatty acids bonded at positions 2 and 3 in the triglyceride are palmitic acid (P) and a fatty acid bonded at position 1 is oleic acid (O).

■ Requirements (A) to (D)

The oils and/or fats for chocolates of Examples 1 to 4 satisfied all of the requirements (A) to (D).
The oils and/or fats of Comparative Examples 1 to 3 did not satisfy requirement (D).

■ Preparation of Chocolate

Chocolates were prepared by using a typical method to refine and conch a mixture of 31.5 parts by weight of cocoa mass, 44.2 parts by weight of sugar, 6.7 parts by weight of whole milk powder, 7.6 parts by weight of cocoa butter, 10 parts by weight of each oil and/or fat for chocolates, 0.5 parts by weight of an emulsifier, and 0.04 parts by weight of vanillin.

■ Prior Examination: Flavor Evaluation, Fracture Load, and Bloom Resistance of Chocolate

Chocolate batters (chocolates of Examples 1 to 4 and Comparative Examples 1 to 3) were prepared by a typical method according to the above formulations using each of the oils and/or fats for chocolates of Examples 1 to 4 and Comparative Examples 1 to 3.

Each chocolate was melted and then cooled, after which 0.2 wt.% of chocolate seed LT (available from Fuji Oil Co., Ltd.) was added to the chocolate batters at 32°C. Molds were filled with the chocolate batters and then cooled at 10°C for 30 minutes, after which the chocolates were released from the molds. Subsequently, the chocolates were stabilized at 20°C for seven days, after which the taste was evaluated, the fracture load was measured, and the bloom resistance was observed. The method for measuring the fracture load and the criteria used when observing the bloom resistance were as follows.

■ Method for Measuring Fracture Load

The chocolate stabilized at 20°C for seven days as described above were incubated for 2 hours in respective temperature ranges, and then measured using a creep meter (creep meter "RE2-33005C" available from Yamabishi).

■ Observation of Bloom Resistance

The chocolate stabilized at 20°C for seven days as described above were stored under a 17°C/28°C cycle condition, a 17°C/30.5°C cycle condition, or a 20°C/32°C cycle condition, and the presence or absence of bloom development on the chocolate surface was observed and evaluated according to the following criteria.

3 points: No change

2 points: A loss of shine is observed.

1 point: Bloom development is observed.

■ Table 5: Results of Preliminary Examination

| | | Example 1 of chocolate | Example 2 of chocolate | Example 3 of chocolate | Example 4 of chocolate | Comparative Example 1 of chocolate | Comparative Example 2 of chocolate | Comparative Example 3 of chocolate |
|---|---|---|---|---|---|---|---|---|
| Fracture load [gf] | 20°C | 5058 | 5455 | 5048 | 5099 | 5751 | 5241 | 7566 |
| | 25°C | 2203 | 2478 | 2223 | 2274 | 2672 | 2386 | 3569 |
| | 28°C | 653 | 744 | 622 | 653 | 775 | 795 | 1173 |
| | 30°C | 296 | 301 | 306 | 301 | 433 | 377 | 574 |
| Storage test 17°C/28°C | Day 0 | 3 | 3 | 3 | 3 | 3 | 3 | 3 |
| | Day 8 | 2 | 2 | 2 | 2 | 2 | 2 | 2 |
| | Day 16 | 2 | 2 | 2 | 2 | 2 | 2 | 2 |
| | Day 28 | 2 | 2 | 2 | 2 | 2 | 2 | 2 |
| Storage test 17°C/30.5°C | Day 0 | 3 | 3 | 3 | 3 | 3 | 3 | 3 |
| | Day 6 | 2 | 2 | 2 | 2 | 2 | 2 | 2 |
| | Day 15 | 2 | 2 | 2 | 2 | 2 | 2 | 1 |
| | Day 20 | 2 | 2 | 2 | 2 | 2 | 2 | 1 |

(continued)

|  |  | Example 1 of chocolate | Example 2 of chocolate | Example 3 of chocolate | Example 4 of chocolate | Comparative Example 1 of chocolate | Comparative Example 2 of chocolate | Comparative Example 3 of chocolate |
|---|---|---|---|---|---|---|---|---|
| Storage test 17°C/32°C | Day 0 | 3 | 3 | 3 | 3 | 3 | 3 | 3 |
|  | Day 8 | 2 | 2 | 2 | 2 | 2 | 2 | 1 |
|  | Day 13 | 2 | 2 | 2 | 2 | 2 | 2 | 1 |
|  | Day 15 | 1 | 1 | 1 | 1 | 1 | 1 | 1 |

■ Discussion Regarding Preliminary Examination

As shown in Table 5, all of the chocolates of Examples 1 to 4, which were the products to be examined, had the same level of quality in both the fracture load and the storage test as that of the chocolates of Comparative Examples 1 and 2, which were typical chocolates. In particular, with respect to the bloom resistance, the chocolates of Examples 1 to 4 and Comparative Examples 1 and 2 were all confirmed to have an effect equal to or higher than that of cocoa butter (Comparative Example 3). In addition, the chocolates of Examples 1 to 4 and Comparative Examples 1 and 2 all exhibited excellent flavor and meltability in the mouth as characteristic of chocolates, similar to that of the chocolate of Comparative Example 3.

Through this preliminary examination, it was confirmed that the chocolates of Examples 1 to 4 and Comparative Examples 1 and 2 had better bloom resistance than cocoa butter (Comparative Example 3) and had no significant difference in heat resistance, and therefore the chocolates of Examples 1 to 4 and Comparative Examples 1 and 2 were subjected to the following examinations.

■ Examination 1: Viscosity Change Suppression Effect

The influence of a seeding agent-based tempering operation on the change in viscosity in a tempering process carried out on a chocolate was examined.

In each example or comparative example, 1 kg of the chocolate batter of the chocolates (chocolates of Examples 1 to 4 and Comparative Examples 1 and 2) was cooled while stirring, and 0.2 wt.% of chocolate seed LT (available from Fuji Oil Co., Ltd.) was added as a seeding agent to the chocolate batter at a product temperature of 33°C. After the ingredients were sufficiently dispersed and stirred, the temperature was adjusted to 31°C in a mixer with a temperature controller, and the torque required for rotation was measured over time by an externally-attached data logger while stirring at 180 rpm.

The results are shown in Table 6.

■ Table 6: Transition of Torque Value of Chocolate (unit: N·m)

|  | Example 1 of chocolate | Example 2 of chocolate | Example 3 of chocolate | Example 4 of chocolate | Comparative Example 1 of chocolate | Comparative Example 2 of chocolate |
|---|---|---|---|---|---|---|
| 10 min | 0.02 | 0.02 | 0.03 | 0.03 | 0.11 | 0.02 |
| 20 min | 0.05 | 0.02 | 0.02 | 0.04 | 0.18 | 0.08 |
| 30 min | 0.13 | 0.08 | 0.06 | 0.07 | 0.33 | 0.23 |
| 40 min | 0.22 | 0.22 | 0.14 | 0.15 | 0.51 | 0.47 |
| 50 min | 0.37 | 0.38 | 0.22 | 0.26 | 0.75 | 0.77 |
| 60 min | 0.55 | 0.63 | 0.33 | 0.37 | 1.02 | 1.16 |
| 70 min | 0.74 | 0.85 | 0.47 | 0.50 | 1.30 | 1.43 |
| 80 min | 0.89 | 1.04 | 0.65 | 0.64 | 1.72 | 2.14 |
| 90 min | 1.11 | 1.35 | 0.85 | 0.79 | 2.26 | 3.02 |
| 100 min | 1.46 | 1.92 | 1.09 | 1.00 | 2.90 | 3.88 |

(continued)

|  | Example 1 of chocolate | Example 2 of chocolate | Example 3 of chocolate | Example 4 of chocolate | Comparative Example 1 of chocolate | Comparative Example 2 of chocolate |
|---|---|---|---|---|---|---|
| 110 min | 1.87 | 2.60 | 1.26 | 1.24 | 3.63 | 4.43 |

■ Discussion Regarding Examination 1

As indicated in Table 6, the chocolates of Examples 1 to 4 exhibited a slower increase in torque value than the chocolates of Comparative Examples 1 and 2, and exhibited a smaller change in viscosity in the tempering process.

Accordingly, it was demonstrated that the use of a chocolate using a specific oil and/or fat for chocolates can reduce the change in viscosity in the tempering process.

■ Examination 2: Hand Tempering

In a process of tempering chocolates using a tempering operation that includes temperature regulation, the influence of the tempering operation on the tempering properties (workability, tempering suitability) was examined. A plurality of minimum temperature points and reheating temperatures were set for the temperature regulation process, and whether favorable tempering properties were exhibited in a wide range of conditions was examined.

Each chocolate was melted and subjected to tempering with the minimum temperature point and the reheating temperature being changed, and the workability was evaluated.

When the workability in the tempering operation was evaluated as being good, the tempered chocolate was poured into a mold, cooled at 10°C for 30 minutes, and released from the mold after the detachment state was observed, and the releasability was evaluated.

The "workability in the tempering operation" and the "releasability after the tempering operation" were evaluated according to the criteria described below, and a score of two points was regarded as passing in both cases. On the basis of these evaluations, a comprehensive evaluation was conducted according to the criteria described below. A score of 2 points or more in the comprehensive evaluation was regarded as passing.

■ Workability in Tempering Operation

2 points: The tempering operation was favorably executed.
1 point: The viscosity immediately after tempering was high, and it was difficult to continue the tempering operation.

■ Releasability After Tempering Operation

2 points: Detachment of about 70% or more of the chocolate poured into the mold was visually confirmed, and the chocolate was easily released from the mold.
1 point: Detachment of less than 70% of the chocolate poured into the mold was visually confirmed, or the chocolate was not easily released from the mold.

■ Comprehensive Evaluation

3 points: In all of the tempering conditions, the tempering operation was favorably executed, detachment of about 70% or more of the chocolate poured into the mold was visually confirmed, and the chocolate was easily released from the mold.

2 points: Although the tempering operation was favorably executed under all of the tempering conditions, detachment of less than 70% of the chocolate poured into the mold was visually confirmed in all of the tempering conditions, or the chocolate was not easily released from the mold.

1 point: The viscosity immediately after tempering was high in all of the tempering conditions, and it was difficult to continue the tempering operation.

■ Table 7

| | | | Example 1 of chocolate | Example 2 of chocolate | Example 3 of chocolate | Example 4 of chocolate | Comparative Example 1 of chocolate | Comparative Example 2 of chocolate |
|---|---|---|---|---|---|---|---|---|
| Test conditions (1) | Minimum temperature point: 25°C Reheating temperature: 27°C | Workability | 2 | 2 | 2 | 2 | 1 | 1 |
| | | Releasability | 2 | 2 | 2 | 2 | - | - |
| Test conditions (2) | Minimum temperature point: 25°C Reheating temperature: 31 °C | Workability | 2 | 2 | 2 | 2 | 1 | 1 |
| | | Releasability | 2 | 2 | 2 | 2 | - | - |
| Test conditions (3) | Minimum temperature point: 26°C Reheating temperature: 28°C | Workability | 2 | 2 | 2 | 2 | 2 | 2 |
| | | Releasability | 2 | 2 | 2 | 2 | 2 | 2 |
| Test conditions (4) | Minimum temperature point: 26°C Reheating temperature: 32°C | Workability | 2 | 2 | 2 | 2 | 2 | 2 |
| | | Releasability | 2 | 2 | 2 | 2 | 2 | 2 |
| Test conditions (5) | Minimum temperature point: 27°C Reheating temperature: 29°C | Workability | 2 | 2 | 2 | 2 | 2 | 2 |
| | | Releasability | 2 | 2 | 2 | 2 | 2 | 2 |
| Test conditions (6) | Minimum temperature point: 27°C Reheating temperature: 33°C | Workability | 2 | 2 | 2 | 2 | 2 | 2 |
| | | Releasability | 2 | 2 | 2 | 1 | 2 | 2 |
| Comprehensive evaluation | | | 3 | 3 | 3 | 2 | 1 | 1 |

EP 4 736 660 A1

■ Discussion Regarding Examination 2

The chocolates of Examples 1 to 4 were evaluated using the chocolates of Comparative Examples 1 and 2 as controls, and as indicated in Table 7, in Examples 1 to 4, the chocolates exhibited favorable workability in all temperature ranges with no observation of a clear change in viscosity, and tempering work was favorably carried out.
Among these, in Examples 1 to 3, the releasability after tempering and cooling were excellent under every tempering condition, and Examples 1 to 3 thus demonstrated that not only workability but also tempering suitability were excellent.

Industrial Applicability

According to the present invention, an oil and/or fat for chocolates and also a chocolate using the same can be provided with the oil and/or fat exhibiting little change in viscosity in a tempering process while also having bloom resistance equivalent to that of typical CBE.
Preferably, the present invention can provide an oil and/or fat for chocolates, and also a chocolate using the same, with the oil and/or fat thereof having good tempering properties under a wide range of tempering conditions.

**Claims**

1. An oil and/or fat for chocolates, the oil and/or fat satisfying all of the following requirements (A) to (D):

   (A) a content of St2O triglyceride is from 10 to 50 wt.%,
   (B) a proportion of a content of StStO triglyceride accounting for the content of St2O triglyceride is 10 wt.% or less,
   (C) a content of P2O triglyceride is 3 wt.% or more, and
   (D) a proportion of a content of PPO triglyceride accounting for the content of P2O triglyceride is 23 wt.% or more;

   provided that St2O triglyceride refers to a triglyceride in which two molecules of stearic acid (St) and one molecule of oleic acid (O) are bonded; StStO triglyceride refers to a triglyceride in which fatty acids bonded at positions 1 and 2 in the triglyceride are stearic acid (St), and a fatty acid bonded at position 3 is oleic acid (O), and a triglyceride in which fatty acids bonded at positions 2 and 3 in the triglyceride are stearic acid (St) and a fatty acid bonded at position 1 is oleic acid (O); P2O triglyceride refers to a triglyceride in which two molecules of palmitic acid (P) and one molecule of oleic acid (O) are bonded; and PPO triglyceride refers to a triglyceride in which fatty acids bonded at positions 1 and 2 in the triglyceride are palmitic acid (P) and a fatty acid bonded at position 3 is oleic acid (O), and a triglyceride in which fatty acids bonded at positions 2 and 3 in the triglyceride are palmitic acid (P) and a fatty acid bonded at position 1 is oleic acid (O).

2. The oil and/or fat for chocolates according to claim 1, wherein (E) a proportion of palmitic acid at position 2 relative to a total palmitic acid in the oil and/or fat is 9 wt.% or more;
   provided that the total palmitic acid content in the oil and/or fat refers to the palmitic acid content in a constituent fatty acid composition at all of position 1 ($\alpha$-position), position 2 ($\beta$-position), and position 3 ($\gamma$-position) among the triglycerides in the oil and/or fat (hereinafter, the palmitic acid content thereof is referred to as "palmitic acid content in the total"), and the proportion of palmitic acid at position 2 relative to the total palmitic acid in the oil and/or fat is calculated by the following calculation equation using the palmitic acid content in the total and the palmitic acid content in the fatty acid composition and constituting position 2 ($\beta$-position) of the triglyceride of the oil and/or fat (hereinafter, the palmitic acid content thereof is referred to as "content of palmitic acid bonded at position 2"):

$$\text{content (\%) of palmitic acid bonded at position 2} \div (\text{palmitic acid content (\%) in total} \times 3) \times 100.$$

3. The oil and/or fat for chocolates according to claim 1, wherein (F) a total of 1,3-StSt-diglyceride content and 1,2-StSt-diglyceride content is 0.25 wt.% or less;
   provided that 1,3-StSt-diglyceride refers to a diglyceride in which fatty acids at positions 1 and 3 are stearic acid (St), and 1,2-StSt-diglyceride refers to a diglyceride in which fatty acids at positions 1 and 2 or positions 2 and 3 are stearic acid (St).

4. The oil and/or fat for chocolates according to claim 2, wherein (F) a total of 1,3-StSt-diglyceride content and 1,2-StSt-diglyceride content is 0.25 wt.% or less;

provided that 1,3-StSt-diglyceride refers to a diglyceride in which fatty acids at positions 1 and 3 are stearic acid (St), and 1,2-StSt-diglyceride refers to a diglyceride in which fatty acids at positions 1 and 2 or at positions 2 and 3 are stearic acid (St).

5. A chocolate comprising from 0.5 to 20 wt.% of the oil and/or fat for chocolates described in any one of claims 1 to 4.

6. The oil and/or fat for chocolates according to any one of claims 1 to 4, comprising at least an oil and/or fat X and an oil and/or fat Y satisfying the following requirements:

oil and/or fat X: the content of St2O triglyceride is 39 wt.% or more, and a proportion of the content of StStO triglyceride accounting for the content of St2O triglyceride is 10 wt.% or less, and
oil and/or fat Y: the content of P2O triglyceride is 5 wt.% or more, and a proportion of the content of PPO triglyceride accounting for the content of P2O triglyceride is 23 wt.% or more.

7. The oil and/or fat for chocolates according to claim 6, wherein a total of 1,3-StSt-diglyceride content and 1,2-StSt-diglyceride content in the oil and/or fat X is 0.4 wt.% or less;
provided that 1,3-StSt-diglyceride refers to a diglyceride in which fatty acids at positions 1 and 3 are stearic acid (St), and 1,2-StSt-diglyceride refers to a diglyceride in which fatty acids at positions 1 and 2 or at positions 2 and 3 are stearic acid (St).

8. A method for producing an oil and/or fat for chocolates, the method comprising mixing an oil and/or fat X and an oil and/or fat Y satisfying the following requirements:

oil and/or fat X: a content of St2O triglyceride is 39 wt.% or more, and a proportion of a content of StStO triglyceride accounting for the content of St2O triglyceride is 10 wt.% or less, and
oil and/or fat Y: a content of P2O triglyceride is 5 wt.% or more, and a proportion of a content of PPO triglyceride accounting for the content of P2O triglyceride is 23 wt.% or more;
provided that St2O triglyceride refers to a triglyceride in which two molecules of stearic acid (St) and one molecule of oleic acid (O) are bonded; StStO triglyceride refers to a triglyceride in which fatty acids bonded at positions 1 and 2 in the triglyceride are stearic acid (St), and a fatty acid bonded at position 3 is oleic acid (O), and a triglyceride in which fatty acids bonded at positions 2 and 3 in the triglyceride are stearic acid (St) and a fatty acid bonded at position 1 is oleic acid (O); P2O triglyceride refers to a triglyceride in which two molecules of palmitic acid (P) and one molecule of oleic acid (O) are bonded; and PPO triglyceride refers to a triglyceride in which fatty acids bonded at positions 1 and 2 in the triglyceride are palmitic acid (P) and a fatty acid bonded at position 3 is oleic acid (O), and a triglyceride in which fatty acids bonded at positions 2 and 3 in the triglyceride are palmitic acid (P) and a fatty acid bonded at position 1 is oleic acid (O).

9. The method for producing an oil and/or fat for chocolates according to claim 8, wherein a total of a content of 1,3-StSt-diglyceride and a content of 1,2-StSt-diglyceride in the oil and/or fat X is 0.4 wt.% or less;
provided that 1,3-StSt-diglyceride refers to a diglyceride in which fatty acids at positions 1 and 3 are stearic acid (St), and 1,2-StSt-diglyceride refers to a diglyceride in which fatty acids at positions 1 and 2 or at positions 2 and 3 are stearic acid (St).

10. The method for producing an oil and/or fat for chocolates according to claim 8 or 9, wherein a production process comprises a diglyceride reduction treatment.

11. A method for producing a chocolate, the method comprising:

preparing a chocolate batter containing from 0.5 to 20 wt.% of the oil and/or fat for chocolates described in any one of claims 1 to 4, and
tempering and solidifying the batter.

12. A method for reducing a change in viscosity of a chocolate over time after a tempering treatment by using, in a tempered chocolate, an oil and/or fat for chocolates with the oil and/fat satisfying all of the following requirements (A) to (D):

(A) a content of St2O triglyceride is from 10 to 50 wt.%,
(B) a proportion of a content of StStO triglyceride accounting for the content of St2O triglyceride is 10 wt.% or less,

(C) a content of P2O triglyceride is 3 wt.% or more, and
(D) a proportion of a content of PPO triglyceride accounting for the content of P2O triglyceride is 23 wt.% or more;

provided that St2O triglyceride refers to a triglyceride in which two molecules of stearic acid (St) and one molecule of oleic acid (O) are bonded; StStO triglyceride refers to a triglyceride in which fatty acids bonded at positions 1 and 2 in the triglyceride are stearic acid (St), and a fatty acid bonded at position 3 is oleic acid (O), and a triglyceride in which fatty acids bonded at positions 2 and 3 in the triglyceride are stearic acid (St) and a fatty acid bonded at position 1 is oleic acid (O); P2O triglyceride refers to a triglyceride in which two molecules of palmitic acid (P) and one molecule of oleic acid (O) are bonded; and PPO triglyceride refers to a triglyceride in which fatty acids bonded at positions 1 and 2 in the triglyceride are palmitic acid (P) and a fatty acid bonded at position 3 is oleic acid (O), and a triglyceride in which fatty acids bonded at positions 2 and 3 in the triglyceride are palmitic acid (P) and a fatty acid bonded at position 1 is oleic acid (O).

## INTERNATIONAL SEARCH REPORT

| International application No. |
|---|
| **PCT/JP2024/021601** |

| A. | CLASSIFICATION OF SUBJECT MATTER |
|---|---|

*A23D 9/00*(2006.01)i; *A23D 9/04*(2006.01)i; *A23G 1/38*(2006.01)i
FI:   A23D9/00 500; A23D9/04; A23G1/38

According to International Patent Classification (IPC) or to both national classification and IPC

| B. | FIELDS SEARCHED |
|---|---|

Minimum documentation searched (classification system followed by classification symbols)

A23D9/00; A23D9/04; A23G1/38

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

Scopus

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111280281 A (WILMAR SHANGHAI BIOTECHNOLOGY RES & DEV CT CO., LTD.) 16 June 2020 (2020-06-16) paragraphs [0219]-[0262], particularly comparative examples 5, 7, tables 1-2 | 1-10 |
| Y | | 1-12 |
| Y | JP 2023-515061 A (AAK AB (PUBL)) 12 April 2023 (2023-04-12) claims, paragraphs [0003]-[0004] | 1-12 |
| Y | WO 2013/168554 A1 (NISSHIN OILIO GROUP LTD.) 14 November 2013 (2013-11-14) claims | 1-12 |
| Y | JP 2014-183760 A (FUJI OIL COMPANY LIMITED) 02 October 2014 (2014-10-02) claims | 1-12 |
| Y | MACRIDACHIS-GONZALEZ, Jorge et al., An Insight into the Solid-State Miscibility of Triacylglycerol Crystals, molecules, 2020, 25, 4562, doi:10.3390/molecules25194562 abstract, 3. Phase Behavior in Mixtures of Saturated-Unsaturated Mixed-Acid TAGs | 1-12 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 August 2024** | **03 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
| --- |
| **PCT/JP2024/021601** |

### C. DOCUMENTS CONSIDERED TO BE RELEVANT

| Category* | Citation of document, with indication, where appropriate, of the relevant passages | Relevant to claim No. |
| --- | --- | --- |
| Y | SASAKI, Mari et al., 6 to Polymorphism and Mixing Phase Behavior of Major Triacylglycerols of Cocoa Butter, Cocoa Butter and Related Compounds, 2012, 151-172, doi: 10.1016/B978-0-9830791-2-5.50009-8<br>introduction, column "polymorphism" | 1-12 |
| Y | GHAZANI, Saeed M. et al., The Ternary Solid State Phase Behavior of Triclinic POP, POS, and SOS and Its Relationship to CB and CBE Properties, Cryst. Growth Des., 2019, 19, 704-713, doi: 10.1021/acs.cgd.8b01273<br>abstract, results and discussion | 1-12 |
| Y | US 4276322 A (LEVER BROTHERS LTD.) 30 June 1981 (1981-06-30)<br>claims, figures | 1-12 |
| Y | MINATO, A. et al., Thermodynamic and Kinetic Study on Phase Behavior of Binary Mixtures of POP and PPO Forming Molecular Compound Systems, J. Phys. Chem. B, 1997, 101, 3498-3505<br>abstract, results | 1-12 |
| Y | BAYES-GARCIA, Laura et al., Phase Behavior of Binary Mixture Systems of Saturated-Unsaturated Mixed-Acid Triacylglycerols: Effects of Glycerol Structures and Chain-Chain Interactions, J. Phys. Chem. B, 2015, 119, 4417-4427, doi: 10.1021/acs.jpcb.5b00673<br>abstract, results | 1-12 |

Form PCT/ISA/210 (second sheet) (July 2022)

**INTERNATIONAL SEARCH REPORT**
Information on patent family members

International application No.

**PCT/JP2024/021601**

| Patent document cited in search report | | | Publication date (day/month/year) | Patent family member(s) | | | Publication date (day/month/year) |
|---|---|---|---|---|---|---|---|
| CN | 111280281 | A | 16 June 2020 | (Family: none) | | | |
| JP | 2023-515061 | A | 12 April 2023 | US | 2023/0078400 | A1 | |
| | | | | paragraphs [0003]-[0004], claims | | | |
| | | | | US | 2023/0092197 | A1 | |
| | | | | WO | 2021/167514 | A1 | |
| | | | | WO | 2021/167516 | A1 | |
| | | | | EP | 4106540 | A1 | |
| | | | | EP | 4106541 | A1 | |
| | | | | AU | 2021223013 | A1 | |
| | | | | AU | 2021223219 | A1 | |
| | | | | BR | 112022014714 | A | |
| | | | | BR | 112022015026 | A | |
| | | | | ZA | 202210248 | B | |
| | | | | JP | 2023-514695 | A | |
| WO | 2013/168554 | A1 | 14 November 2013 | US | 2015/0093492 | A1 | |
| | | | | claims | | | |
| | | | | EP | 2848127 | A1 | |
| | | | | CN | 104284594 | A | |
| | | | | KR | 10-2015-0003384 | A | |
| | | | | RU | 2562949 | C | |
| JP | 2014-183760 | A | 02 October 2014 | (Family: none) | | | |
| US | 4276322 | A | 30 June 1981 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2023105437 A
- WO 2013065726 A

### Non-patent literature cited in the description

- **Y. WATANABE et al.** Enzymatic Analysis of Positional Fatty Acid Distributions in Triacylglycerols by 1(3)-Selective Transesterification with Candida antarctica Lipase B: a Collaborative Study. *J. of Oleo Science*, 2015, vol. 64, 1193-1205
- *J. High Resol. Chromatogr.*, 1995, vol. 18, 105-107
- **ADLOF R.O**. *Analysis of Triacylglycerol Positional Isomers by Silver Ion High Performance Liquid Chromatography*